# EUROPEAN PATENT SPECIFICATION

(11) **EP 2 259 631 B1**
(45) Date of publication and mention of the grant of the patent: **01.07.2020**
(21) Application number: 09724183.0
(22) Date of filing: 23.03.2009
(51) Int. Cl.: H04W 48/18, H04W 8/08, H04W 36/04, H04W 36/14, H04W 36/38

(54) **COMMUNICATION SYSTEM, COMMUNICATION CHANNEL EFFICIENCY IMPROVING DEVICE, AND RADIO COMMUNICATION TERMINAL**
KOMMUNIKATIONSSYSTEM, VORRICHTUNG ZUR VERBESSERUNG DER KOMMUNIKATIONSKANALEFFIZIENZ UND FUNKKOMMUNIKATIONSENDGERÄT
SYSTÈME DE COMMUNICATION, DISPOSITIF D'AMÉLIORATION DE RENDEMENT DE CANAL DE COMMUNICATION ET TERMINAL DE COMMUNICATION RADIO

(30) Priority: 24.03.2008 JP 2008076091
(43) Date of publication of application: 08.12.2010
(73) Proprietor: Panasonic Intellectual Property Corporation of America, Torrance, CA 90503 (US)
(72) Inventor: HIRANO, Jun, Osaka 540-6207 (JP); AOYAMA, Takahisa, Osaka 540-6207 (JP); IKEDA, Shinkichi, Osaka 540-6207 (JP)
(74) Representative: Grünecker Patent- und Rechtsanwälte PartG mbB
(86) International application number: PCT/JP2009/001261
(87) International publication number: WO 2009/119056

(56) References cited:
- WO-A1-2007/038947
- JP-A- 2002 112 347
- JP-A- 2005 033 707
- JP-A- 2006 270 910
- JP-A- 2007 189 444
- US-A1- 2007 070 987
- US-A1- 2007 230 423

## Description

### TECHNICAL FIELD

The present invention relates to a communication system, a communication channel efficiency improving device, and a radio communication terminal.

### BACKGROUND ART

Currently, a radio communication terminal is known, which has radio communication functions such as cellular communication including service area at middle to long distance for each base station and also the functions such as Wireless Local Area Network (Wireless LAN) function with service area at relatively short distance, and which can be connected to a plurality of different types of networks.

As the networks, consisting of a plurality of different types of networks, discussions are made, in Third Generation Partnership Project (3GPP), on radio communication terminal having communication functions with different types of networks and related communication technique. In addition to 3GPP network (hereinafter referred "as 3G network", these networks include, wireless LAN and other cellular networks (networks up to the second generation; including 3GPP2 network), wireless wide area network (WWAN), such as WiMAX (Worldwide Interoperability for Microwave Access , IEEE 802.16).

In particular, discussions are being made with the purposes such as support of a plurality of application services, which require high Quality of Service (QoS) of important data for the accomplishment of seamless mobility, real time video, Voice over Internet Protocol (VoIP).

Also, there are a multiple number of references where the techniques relating to 3GPP are described. For instance, in the Non-Patent Document 1 as given below, the arrangements of networks including 3G network and non-3G network are disclosed. Further, in the Non-Patent Document 2 as given below, a technique of Radio Resource Management (RRM) in 3GPP is disclosed. In 3GPP, it is possible to monitor and manage resources used at radio base stations, for instance. As a result, it is possible to accomplish the communication where resources can be efficiently used.

Also, a technique of Mobility Management Entity (MME) in 3GPP is disclosed in the Non Patent Document 3. For instance, by maintaining information relating to the moving of terminals by MME assigned to each of several terminals, it is possible to efficiently change the setting associated with the moving of the terminals. Further, in the Non-Patent Document 4, a technique relating to mobility management of 3G network, 3GPP2 and WiMAX networks are disclosed;
[Non-Patent Document 1] 3rd Generation Partnership Project; Technical Specification Group Services and System Aspects; Architecture Enhancements for non-3GPP Accesses (Release 8); 3GPP TS 23.402, V1.3.0; September 2007.
[Non-Patent Document 2] 3rd Generation Partnership Project; Technical Specification Group Radio Access Network; Terminal conformance specification; Radio transmission and reception (FDD) (Release 6); 3GPP TS 34.121; V6.3.0; December 2005.
[Non-Patent Document 3] 3rd Generation Partnership Project; Technical Specification Group Services and System Aspects; GPRS enhancements for E-UTRAN access (Release 8); 3GPP TS 23.401; VI.2.1; September 2007.
[Non-Patent Document 4] 3rd Generation Partnership Project; Technical Specification Group Radio Access Network; Improved Network Controlled Mobility between E-UTRAN and 3GPP2/Mobile WiMAX Radio Technologies; 3GPP TR 36.938; V1.0.0; October 2007.

According to 3GPP, it is possible to integrally manage different types of networks. For instance, an operator (a manager) of 3G network can manage wireless LAN/WiMAX networks, can prepare domains by combining groups of different types of networks such as 3G network or wireless LAN/WiMAX network, and can offer services on connection point to radio communication terminals.

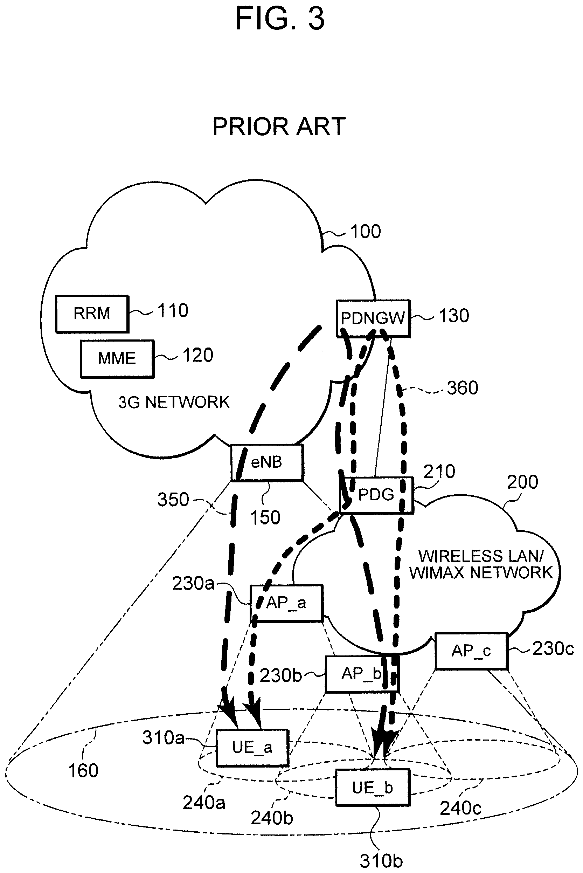

For instance, as shown in Fig. 3, PDG (Packet Data Gateway) 210 of wireless LAN/WiMAX network 200 is connected to PDNGW (Packet Data Network Gateway) 130 of 3G network 100, and 3G network 100 maintains the relation of reliability with the wireless LAN/WiMAX network 200.

Further, 3G network 100 has eNB (evolved Node B) 150 (only one eNB is shown in Fig. 3), which will be a connection point to a radio communication terminal (User Equipment (UE)) (In Fig. 3 two terminals are shown: UE_a310a and UE_b310b; Hereinafter, may be referred as UE 310). The wireless LAN/WiMAX network 200 has AP, which will be a connection point to UE 310 (In Fig. 3, AP_a230a, AP_b230b, and AP_c230c are shown; Hereinafter, may be referred as AP 230). Also, UE 310 has both of 3G network interface connected to eNB 150 of 3G network 100 and wireless LAN interface connectable to AP 230 of wireless LAN interface.

Normally, a communication area (cell) 160 of eNB 150 has wider area than communication areas 240a, 240b, and 240c of AP 230 (hereinafter, a plurality of communication areas may be collectively referred as a communication area 240). Further, the communication area 160 of eNB 150 and the communication area 240 of AP 230 may be overlapped on each other.

Also, the radio resource management entity (hereinafter, simply referred as "RRM") in 3G network 100 is a communication device (or one of functional entities in the device), which can monitor and identify radio resources of eNB 150 and can perform management of resources so that adequate and efficient use of resources can be carried out.

Further, the mobility management entity (hereinafter, simply referred as "MME") in 3G network 100 is a communication device (or one of functional entities in the device), which can maintain, manage or offer information relating to connection and moving of UE 310.

Here, it is supposed that, in Fig. 3, each of UE 310a and UE 310b is connected to either one of 3G network 100 or the wireless LAN/WiMAX network 200. In order that UE 310 can receive services via the networks, it is connected to various types of networks including the networks as given above and performs communication with the network entity (including UE, which is a correspondent node) as desired. The network (of various access modes), to which UE 310 is connected, is called "access network". Two access networks shown in the figure (i.e. 3G network 100 and wireless LAN/WiMAX network 200) are overlapped on each other. Also, it is supposed that both of UE 310a and UE 310b are positioned in the areas where cover areas of two access networks are overlapped on each other.

Specifically, in Fig. 3, for instance, UE_a310a can be connected to the 3G network 100 via eNB 150 and also can be connected to the wireless LAN/WiMAX network 200 via AP_a230a, and UE_b310b can be connected to the 3G network 100 via the eNB 150 and can be connected to the wireless LAN/WiMAX network 200 via AP_b230b.

For instance, in case UE_a310a is connected to 3G network 100 and UE_b230b is connected to the wireless LAN/WiMAX network 200 (i.e. in case UE_a310a and UE_b230b are connected to different access networks respectively), a communication channel between UE_a310a and UE_b310b is formed as a channel 350 (via eNB 150, PDNGW 130, PDG 210 and AP_b230b).

Also, in case UE_a310a and UE_b310b are both connected to the wireless LAN/WiMAX network 200 (i.e. in case both of UE_a310a and UE_b310b are connected to the same access network), a communication channel between UE_a310a and UE_b310b is formed as a channel 360 (via AP_a230a, PDG 210, PDNGW 130, PDG 210, and AP_b230b).

In case UE_a310a and UE_b310b are connected to the same wireless LAN/WiMAX network 200, a packet of user data may be transferred to the wireless LAN/WiMAX network 200 by turning back the communication channel without transferring the packet of user data to PDNGW 130. In so doing, the communication channel is shortened by the length of round trip route between PDG 210 and PDNGW 130, and the efficiency can be improved.

As described above, the method to improve the efficiency of the communication channel by turning back the packet at the routing entities in a common network is effective in case both of UE's 310 are connected to the same routing entity (access network). If it is known as to which of the packets should be turned back to which object at the routing entity, it can be accomplished relatively easily.

In actual network conditions, however, UE 310, which is going to start communication, is not necessarily connected to the same access network (under the control of a common routing entity), and there is a problem in that connection must be made via a normal communication channel (the channel 350 shown in Fig. 3) or the communication via the communication channel (the channel 360 shown in Fig. 3) where the improving of the efficiency as desired may not be accomplished (i.e. communication must be performed via the channel 350 of Fig. 3) (the first problem).

Further, it appears that RRM 110 may, for instance, has information to indicate how many resources are used by each of the base stations, or information to indicate the possibility that which of the base stations is overlapped in the communicable range (communication area) because it is not known how many transmission areas are managed by each of the base stations. Also, it seems that MME 120 may have individually has information to indicate in which authentication condition it is or information to specify to which access network the connection is made.

Also, it appears that the data transfer management entity (e.g. PDNGW 130 or the other position information management entity) may have information to indicate as to which destination the transmission should be made to transfer a packet to the destination shown in the data - individually for each destination. Also, the connection management entity (e.g. a base station such as eNB 150 or AP 230) seems to have means to instruct the collection of information as to how connection should be changed to different access networks in the current connecting condition of each of UE's 310, and also means to instruct the connection change to different access networks to UE.

Each of the entities such as RRM 110, MME 120, transfer management entity, connection management entity, etc. has only the function to individually manage the information to establish the communication, which is needed conventionally, and this may mean that information exchange of higher grade in association with a plurality of UE's 310 for building up an efficient communication channel is not necessarily performed.

Therefore, in an operator management network where control of connecting conditions of UE 310 can be accomplished from the network side, some of the management entities on the network side may be able to control so that communication will be started after an instruction is given to one of the UE's 310 to change the access network. However, in 3GPP system currently in use, radio resource management, mobility management of terminals, transfer management of data, transfer of data packet or the like are managed by different entities in the network. Accordingly, the method is not known, by which judgment can be made by referring to which kind of conditions the communication channel with higher efficiency can be prepared, or a method to judge how the communication channel with higher efficiency can be ultimately obtained on the network side, and by giving which instruction for the connection management entity (mostly, base station), which can give instruction to change the access network to UE 310 (the second problem). Another example can be found in patent document WO2007/038947.

### DISCLOSURE OF THE INVENTION

The invention is defined by the appended claims.

To solve the problems as described above, it is an object of the invention to provide a communication system, a communication channel efficiency improving device, and a radio communication terminals, by which it is possible to improve the efficiency of the communication channel of the communication performed between radio communication terminals.

To attain the above object, the communication system according to the present invention provides a communication system for improving efficiency of a communication channel in the communication of radio communication terminals performing communication with each other in networks under the same management, wherein said communication system is so arranged that an instruction is given to at least one of said radio communication terminals to change connection to improve the efficiency of said communication channel with the other of said radio communication terminals.

With the arrangement as described above, it is possible to improve the efficiency of the communication channel in the communication performed between radio communication terminals.

Also, to attain the above object, the present invention provides a communication channel efficiency improving device operating in a communication system for improving efficiency of a communication channel in the communication of radio communication terminals performing communication with each other in networks under the same management, wherein said communication system is so arranged that an instruction is given to at least one of said radio communication terminals to change connection to improve the efficiency of said communication channel with the other of said radio communication terminals wherein said device comprises:
information collecting means for collecting information relating to communication of said radio communication terminals from an entity in a network; and
communication channel judging means for judging whether it is possible or not to improve efficiency of the communication channel in the communication of said radio communication terminals based on said information collected by said information collecting means.

With the arrangement as described above, it is possible to collect information and to judge the improving of the efficiency of the communication channel.

Further, to attain the above object, the invention provides a communication terminal, which can improve efficiency of a communication channel in the communication between radio communication terminals, communication with each other in the network under the same management, wherein said radio communication terminal comprises:
means for confirming connection of networks under the same management for confirming whether a correspondent node of the radio communication terminal is connected to the network under the same management; and
notifying means for notifying to the network in case the correspondent node of the radio communication terminal itself is connected to the network under the same management.
With the arrangement as described above, the radio communication terminal can notify that the correspondent node of its own is connected to the network under the same management, and judgment can be made to improve the efficiency of the communication channel on the network side according to this notification.

The present invention has the arrangement as described above and provides such effects that the efficiency of the communication channel in the communication performed between radio communication terminals can be improved.

### BRIEF DESCRIPTION OF THE DRAWINGS

Fig. 1 is a schematical drawing to show an example of a communication system according to a first embodiment of the invention;
Fig. 2 is a schematical drawing to show an example of a communication system according to a second embodiment of the invention;
Fig. 3 is a schematical drawing to show an example of a communication system according to the prior art;
Fig. 4 is a schematical drawing to show a first example of a communication system according to a third embodiment of the invention; and
Fig. 5 is a schematical drawing to show a second example of a communication system according to the third embodiment of the invention.

### BEST MODE FOR CARRYING OUT THE INVENTION

Referring to the attached drawings, description will be given below on a first embodiment and a second embodiment of the present invention.

### <The first embodiment>

First, description will be given on the first embodiment of the invention. In the first embodiment for carrying out the invention, it is tried to improve the efficiency of the communication channel in the communication between UEs (User Equipments) by a communication channel efficiency improving entity, which can intensively summarize information such as information of individual communication network, correspondent node in communication, network topology (logical/physical), etc.

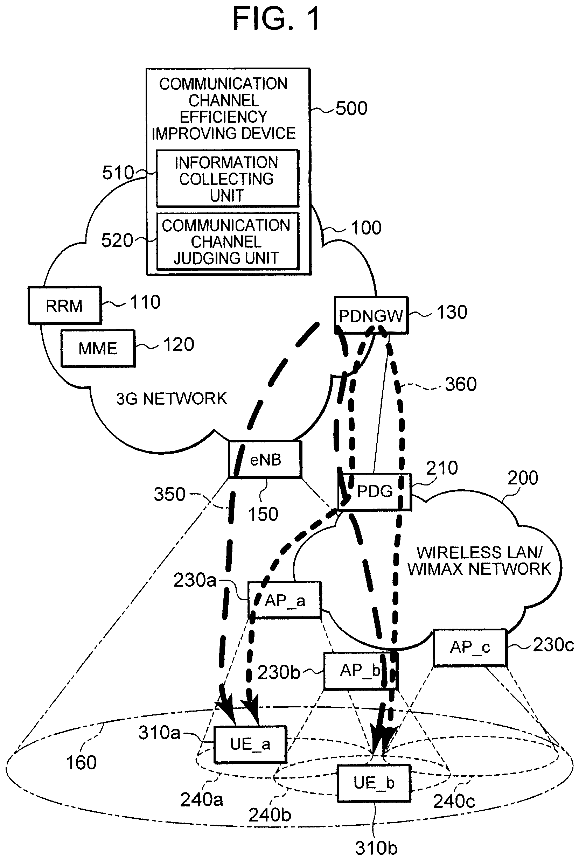

Now, referring to Fig. 1, description will be given on a first embodiment for carrying out the present invention. Fig. 1 is a schematical drawing to show an example of a communication system in the first embodiment of the invention. Of the component elements of the communication system shown in Fig. 1, those component elements as common to those of the communication system shown in Fig. 3, detailed description is not given here.

As shown In Fig. 1, a communication channel efficiency improving device (a device provided with communication channel efficiency improving entity) 500 is disposed in a 3G network 100, for instance, and it has an information collecting unit 510 for collecting and managing types of information necessary for improving the efficiency of the communication channel from each of the devices such as RRM 110, MME 120, eNB 150, PDG 210, etc., and it also has a communication channel judging unit 520 for judging whether the efficiency of the communication channel of the communication performed by UE can be improved or not based on the information collected by the information collecting unit 510, and it instructs the improving of efficiency of the communication channel if it is possible. The communication channel efficiency improving entity can be provided on any arbitrary type of device on the network. Here, description is given on an example, in which it is installed as an independent communication channel efficiency improving device 500.

The information collecting unit 510 of the communication channel efficiency improving device 500 has the function to collect the types of information relating to each of UE's 310 during communication from a connection management entity such as eNB 150 and AP 230 (or PDG 210). As a result, the communication channel efficiency improving device 500 can identify as to which position which of the UE's 310 is currently connected or is performing communication (or it is going to perform communication).

Also, the information collecting unit 510 has the function to collect types of information relating to transmission destination and transmission source of the data of UE 310 from the transfer management entity such as PDNGW 130. As a result, the communication channel efficiency improving device 500 can identify a set of UE 310 and another UE 310 performing communication with each other (i.e. UE 310 and another UE 310 performing communication with each other) based on the information collected from the transfer management entity, which generally performs processing on the next transfer destination.

The information collecting unit 510 has the function to collect types of information relating to connecting conditions of UE 310 from MME (mobility management entity) 120, for instance. As a result, the communication channel efficiency improving device 500 can select the communication, in which UE 310 and another UE 310 are within a range manageable by itself through the processing such as combination with other type of information.

Further, the information collecting unit 510 has the function to collect types of information relating to the overlapping relation of communication areas of each of base stations (such as eNB 150 or AP 230) or to collect the information relating to usage of resources from RRM (radio resource management entity) 110. By this function, the communication channel efficiency improving device 500 can confirm the possibility of the presence of access network, to which the change can be made.

Further, the information collecting unit 510 collects various types of information relating to ability information, preference, etc. of UE 310 and from MME 120 (or other entity within the network) or from UE 310. As a result, the communication channel efficiency improving device 500 can judge as to which access network the connection of the UE 310 should be changed, which is performing communication (or UE 310, which is going to perform communication).

Also, the communication channel judging unit 520 has the function to judge whether the communication channel with improved efficiency can be realized by changing communication channel of UE 310, and if the communication channel is changed, it has the function to notify the change of connection of UE 310 to the connection management entity. By this function, the communication channel efficiency improving device 500 can ultimately request UE 310 to change the connection.

The communication channel judging unit 520 can identify and comprehend current conditions (such as connecting conditions, communication conditions, etc.) of all of UE's 310 according to various types of information necessary for setting of channels collected by the information collecting unit 510 from the entities within the network. For instance, it can allocate the most suitable access network (resource) or can judge as to whether the efficiency of the communication channel can be improved by moving which of UE 310 to which of the access networks. As a result, the communication channel efficiency improving device 500 instructs the improving of the efficiency of the communication channel by routing entity (including the case of connection management entity) after preparing the condition to improve the efficiency of the communication channel by changing the connection of UE 310 to an adequate access network.

As described above, the information collecting unit 510 can collect various types of information from various entities in the network, but it is not necessarily to collect information of all of the entities in the network. Specifically, the information collecting unit 510 can collect only the information from the entities in an arbitrary network (or from an entity in a network where information can be collected), and the information channel judging unit 520 can judge the change of communication channel by using only the information of the entity in some of the networks.

Next, description will be given on an example of operation in the first embodiment of the invention. The communication channel efficiency improving device 500 collects those types of information relating to UE 310, which is connected to this domain and is performing communication, and by referring to the collected information (e.g. destination information or transmission source information o the communication of UE 310), it can select the communication within the management range of the communication channel efficiency improving device 500 (i.e. the communication channel, which can be changed by instructing the entities in each network under the management) and UE 310 connected to this domain is performing communication with the other UE 310.

The communication channel efficiency improving device 500 refers to the information relating to the communication between UE 310 and another UE 310 connected to the same domain, and further, refers to the information relating to the communication (e.g. the information on the resources collected from RRM 110 or MME 120, the information on the connectable network information, and ability information of UE 310 (e.g. radio access technique held by UE 310, preference, etc.), and the communication channel efficiency improving device 500 judges whether the efficiency of the communication channel can be improved or not by changing the communication channel relating to this communication. Further, a method to re-configure communication channel with the improved efficiency is decided (more concretely, as to which UE 310 should be connected to which of the networks). Then, an instruction necessary to accomplish the communication channel with improved efficiency is given to an entity in adequate network (i.e. routing entity or connection management entity), and an instruction is given to change the connection to UE 310.

When an instruction to change the connection is received, UE 310 changes the connection according to this instruction, the efficiency of the communication channel can be improved. In this case, the communication channel efficiency improving device 500 is operating on the network side, and UE 310 has no need to identify whether or not the instruction to change the connection from the connection management entity is an instruction to change the connection based on the result of judgment by the communication channel efficiency improving device. Further, UE 310 may neglect the instruction of the connection change at its own decision, or it may be so arranged that the instruction of the connection change from the network side must be followed. Further, the connection management entity may give instruction to UE 310 that it is an instruction of the connection change based on the result of judgment by the communication channel efficiency improving device 500 (e.g. a flag is attached on the notification message), or it may so arranged that UE 310 must follow the instruction of the connection change based on the result of judgment by the communication channel efficiency improving device 500.

For instance, it is supposed here that the communication channel efficiency improving device 500 selects the communication performed between UE 310 and another UE 310 connected to the same domain (i.e. UE_a310a and UE_b310b) via a channel 350 as shown in Fig. 1, and judges that it would be better to have communication by connecting to the same access network (wireless LAN/WiMAX network 200). In this case, the communication channel efficiency improving device 500 asks to prepare resources necessary when communication is performed via the same access network (i.e. the wireless LAN/WiMAX network 200) would be prepared at the entity in each network, and also instructs to change the connection so that UE_a310a changes the connection from eNB 150 to AP_b230b.

As a result, the communication channel between UE_a310a and UE_b310b is changed to a channel 360. Further, when the communication channel efficiency improving device 500 or PDNGW 130 notifies PDG 210 that there is no need to transfer this communication to PDNGW 130 (or PDG 310 voluntarily judges that there is no need to transfer it to PDNGW 130), round trip route between PDG 210 and PDNGW 130 can be shortened. For instance, the communication channel with higher efficiency can be realized such as the case where a packet arrived from AP_a210a is turned back at PDG 210 and is transferred to AP_b210b.

In the example as described above, it is so arranged that one of the connections of UE_a310a and UE_b310b connected via different types of radio access techniques is changed over, and communication is performed by the same type of radio access technique while it may be so designed that both of UE_a310a and UE_b310b connected by the same type of radio access technique are changed to the connection to different types of the same radio access technique.

In the first embodiment of the invention as described above, there is no special restriction on the information collecting method (a push-type information exchange method, by which information is given from each of the entities to offer information to the communication channel efficiency improving device 500, or a pull-type information exchange method, by which information is offered from each entity in response to the request from the communication channel efficiency improving device 500). Specifically, any of the following methods may be used: an instruction notifying method to UE 310 or other entities, a method to make UE 310 change the connection, and there is no special restriction on the channel of the notification message or on a format of the notification message, etc., and any type of method or format may be used.

For instance, any of the following methods may be adopted to make UE 310 perform connection change, e.g. a method, by which the connection management entity explicitly transmits an instruction message (a message to instruct the connection change), a method to induce connection change when UE 310 selects a specific access network by changing selection of priority of the access network by UE, or a method to reply to the allowing of the connection selectively to the request to change the access network by UE 310 (by selecting the access network, which is to be connected). Or, the operation relating to the first embodiment of the invention may be carried out successively or in parallel to a plurality of UE's 310 to any UE 310 connected under the control of the same domain.

In the description as given above, it is so arranged that the communication channel efficiency improving device 500 is disposed on the network side and the types of information useful for improving the efficiency of communication channel dispersed and managed by the entities in each network may be collectively summarized, while it may be so designed that the function of the communication channel efficiency improving entity is disposed on the network side, and a plurality of devices dispersed and held by separately maintaining the functions of the communication channel efficiency improving entity (may be incorporated in the existing communication device), and that the efficiency of communication channel can be improved by exchanging information between a plurality of communication channel efficiency improving entities arranged in dispersed manner.

As described above, in the first embodiment of the invention, under the condition where communication management is performed when the entities in a network are operating independently, by creating a condition where UE 310 and another UE 310 are performing communication with each other while connected in the same domain, (i.e. networks under the control of common routing entity), it is possible to improve the efficiency of the communication channel relating to the communication performed between UE 310 and another UE 310.

### <The second embodiment>

Next, description will be given on the second embodiment of the invention. In the first embodiment of the invention as described above, it is possible to judge as to whether the efficiency of the communication channel between UE 310 and another UE 310 with each other on the network side and to give instruction to improve the efficiency of the communication channel. However, there are normally a multiple number of UE's and when communication channels are selected where efficiency can be improved in the communication of a multiple number of UE's 310 on the network side, a large amount of traffics or a great deal of processings are required on the network side. Also, in case the communication channel efficiency improving device 500 is introduced, which gives unified judgment by collecting various types of information, there are a multiple number of types of information, which must be collected and must be referred by the communication channel efficiency improving device 500 in a large scale network, and this means the communication channel efficiency improving device 500 must have a vast amount of processing abilities.

Specifically, in case of a large scale network or in case there are a multiple number of UE's 310, in the communication channel efficiency improving device in the first embodiment of the invention as described above, various types of information at each of UE's 310 or in the network node must be collected individually from each of the entities (such as RRM 110, MME 120, PDNGW 130, PDN 210, etc.), and it is necessary to decide whether the communication channel must be changed or not by generally estimating current conditions of the communication of UE 310 or the condition of future prediction.

Also, when the functions of the communication channel efficiency improving entity are disposed in dispersed manner on the network, a large amount of traffics may be generated by exchange of information between the communication channel efficiency entities installed in dispersed condition.

On the other hand, according to the second embodiment of the invention, it is possible to reduce the burden (burden of processing) on the network side by notifying the information, which can be known by UE 310 (i.e. information useful to judge the improving of the efficiency of the communication channel) to the network side by UE 310 itself.

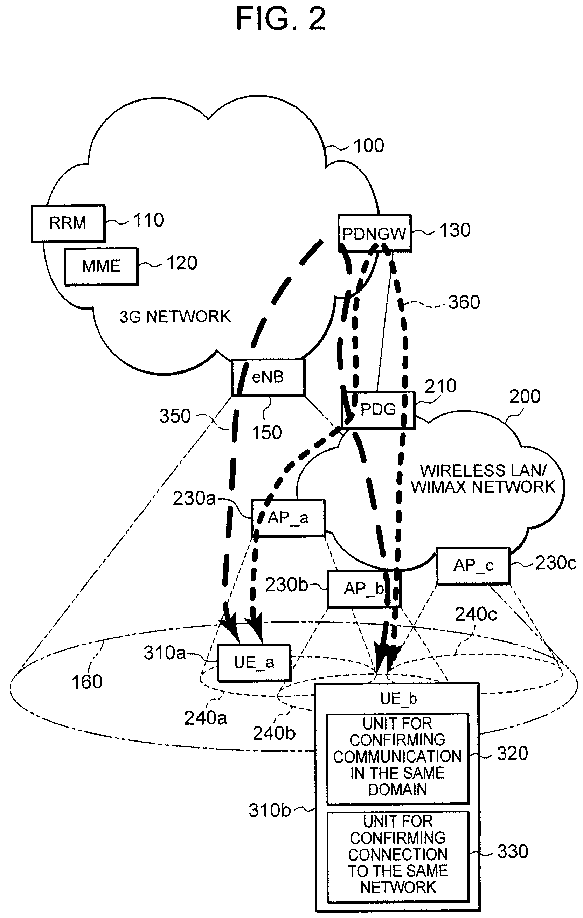

Now, referring to Fig. 2, description will be given below on the second embodiment of the invention. Fig. 2 is a schematical drawing to show an example of a communication system according to the second embodiment of the invention. Among the component elements of the communication system shown in Fig. 2, detailed description is not given here on those component elements common to those of the communication system shown in Fig. 3.

For instance, as shown in Fig. 2, UE_b310b in the second embodiment of the invention has a unit 320 for confirming communication in the same domain, which judges whether there is a correspondent node connected to the same domain or not, and if a correspondent node connected with the same domain is present, the unit 320 notifies the fact to the network side. Also, UE_b310b has a unit 330 for confirming connection to the same network, which judges whether the correspondent node connected to the same domain can be connected to the same access network or not, and if the correspondent node connected to the same domain can be connected to the same access network, the unit 330 notifies the fact to the network side. In Fig. 2, only UE_b310b has the unit 320 for confirming the communication in the same domain and the unit 330 for confirming connection to the same network, while UE_a310a and any other arbitrary UE (not shown) has the unit 320 for confirming the communication in the same domain and the unit 330 for confirming connection to the same network.

The unit 320 for confirming the communication in the same domain confirms whether a correspondent node of the communication performed by itself is connected to the same domain as UE 310 or not. If there is communication with another UE 310 connected to the same domain, it has the function to judge that the improving of the efficiency of the communication channel relating to the communication with this another UE 310 may be possible. In this case, the network side can judge that it is possible to improve the efficiency of the communication channel for the communication between UE's 310 with each other on the network side by notifying the address of the correspondent node connected to the same domain or identification information to specify the communication session to the network side. In case the unit 320 for confirming the communication in the same domain may judge whether it is possible or not to improve the efficiency of the communication channel for the communication with said another UE 310 although these are connected to different domains, it is confirmed whether it is possible or not to connect to UE 310 and the correspondent node can be connected to the same domain, if these can be connected to the same domain.

When the presence of the correspondent node connected to the same domain is confirmed, the unit 330 for confirming connection to the same network confirms whether or not UE 310 and the correspondent node (i.e. between UE 310 and another UE 310) can perform communication by connecting to the same access network of the same domain. As a method to confirm this, a method is known, which is to make inquiry on the type of a radio access technique currently used for connection, on the type of a radio access technique provided on the correspondent node, and on the type of a radio access technique usable for connection under the current situation, etc. When it is identified that the efficiency can be improved by connecting to the same access network, communication can be made via the communication channel, for which the efficiency would be improved by connecting to the same access network. In this case, UE 310 can judge that the network side can improve the efficiency of communication channel for the communication between UE 310 and UE 310 by notifying the type of the radio access technique common to the correspondent node to the network side together with identification information to specify the address of the correspondent node or its communication session.

The following methods are known as the methods, by which UE 310 itself and the correspondent node (between UE 310 and another UE 310 with each other) can perform communication by connecting to the same access network of the same domain. For instance, a method to notify domain identification information to specify the connected domain at the time of signaling of Session Initiation Protocol (SIP) (e.g. "invite" transmitted at the starting of the communication), (or identification information to specify the connected access network), a method to notify identification information to specify the connectable access network, or a method to notify the connected domain (or the connected access network) by signaling of Non Access Stratum (NAS) or by signaling by the other communication device. In this case, it is desirable that the correspondent node, which received notification of identification information of the connected access network (or identification information of the connectable access network), confirms that it is currently connected (or can be connected) to the same access network, and if the same access network is in sight, it is desirable to send a reply. In so doing, UE 310 can identify that communication can be performed with this correspondent node via the same access network. Also, when communication is performed between UE 310 and the correspondent node, if it is possible to select a plurality of access networks, a type of information to indicate that it is more desirable to which access network it is to be connected (i.e. the priority to use the access network) may be notified from UE 310 to the correspondent node (or reversely, from the correspondent node to UE 310). As a result, communication can be performed via the same access network, which is more desirable. In the present specification, the same domain means a network under the same management. For instance, not only a group of networks, which are managed by the same manager (operator) but also a group of networks, which have different managers but a relation of reliability is established between the networks, is included in the same category of the network under the same management.

As a method, by which UE can identify the type of radio access technique provided on the correspondent node or the type of radio access technique, which can be used for connection under the current condition, the use of performance information at the time of network connection can be used. This means that, to provide adequate service to each of UE's 310, when the network side collects abilities (performance) on UE 310 and when UE 310 is connected to the network, it appears that the information relating to the node (or entity) within the network (i.e. performance information) is maintained. When UE 310 makes inquiry on the information for the correspondent node (i.e. performance information) to this entity or when UE 310 request the correspondent node to deliver necessary information, UE 310 can comprehend the necessary information.

The unit 330 for confirming connection to the same network may acquire more detailed information in order to judge whether it is possible or not to connect to the same access network as the correspondent node. For instance, when an inquiry may be made on the connection management entity such as eNB 150 or AP 230 (or on the routing entity such as PDG 210) as being in sight from the correspondent node, and if it is confirmed that the same connection management entity (or routing entity) is in sight, it may be judged that it is possible to connect to the same access network of the same domain. Also, an inquiry is made as to whether a connection management entity such as eNB 150 or AP 230, to which it is connected (or it can be connected), is in sight to the correspondent node, and if it is confirmed that the correspondent node in question is in sight, it may be judged that it is possible to connect to the same access network of the same domain.

The unit 330 for confirming communication to the same network does not necessarily have to receive the unit 320 for confirming the communication in the same domain from the result of confirmation that the correspondent node is connected to the same domain. For instance, when the communication channel is turned back to the same domain (i.e. when the domain of packet input is the same as the domain of packet output) by an arbitrary entity on the network side (such as PDNGW 130), a notification is given from the entity, which is a point of turning back, to UE 310 that there is possibility of communication to have the same domain as the correspondent node, and it may be judged that the correspondent node is connected to the same domain by this notification.

Even in case where UE 310 and its correspondent node can refer to the same access network, the unit 330 for confirming connection to the same network may confirm whether UE 310 and/or the correspondent node can be connected to the access network or not, or whether it is possible to maintain sufficient resources or not even when connection can be made to the network side, and if it is confirmed that communication can be reliably performed via the same access network, it may be judged that it is possible to connect to the same access network of the same domain.

In the second embodiment of the invention, UE 310 notifies information useful for judging the improving of the efficiency of the communication channel to the network side, while there is no specific restriction on the object of notification, and an adequate device may be selected depending on the system, which is to be accomplished. For instance, UE 310 may identify in advance an address of a specific device in the network (i.e. a specific device such as the communication channel efficiency improving device 500 of Fig. 1 or a management device such as a home agent in the mobile IP), and notification may be made to this address. Also, it may be so arranged that UE 310 gives notification to a device such as AP 230, PDG 210, eNB 150, etc., which can be confirmed by UE 310 itself, and that the device, which receives the notification from UE 310, may transmit it adequately to the specific device.

On the network side, there may be a device where the functions are collectively summed up (i.e. a specific device such as the communication channel efficiency improving device 500 of Fig. 1), and the communication channel may be decided or instructed, for which efficiency has been improved by this device. Or, the communication channel with the improved efficiency may be decided or instructed by processing by an arbitrary device (or cooperative operation of a plurality of arbitrary devices) under the condition where communication channel efficiency entity is arranged in dispersed manner. Specifically, in the operation by the second embodiment of the invention, when UE 310 notifies a type of information useful for the judgment of the improved efficiency of the communication channel to the network side, the network side performs basically the same operation as in the first embodiment of the invention (except that it is not necessary to perform information collecting or processing relating to the information useful for the judgment of the improved efficiency of the communication channel as notified from UE 310), and it is possible to accomplish the improving of the efficiency of the communication channel for the communication carried out by UE 310.

It is desirable that UE 310 notifies the information useful for the judgment of the improving of the efficiency of the communication channel to the network side only when UE 310 can judge that the efficiency of the communication channel can be improved by itself. In this case, the improving of the efficiency is judged and processed only when it is decided that the improving of the efficiency of the communication channel is judged by UE 310 by using the transmission of the information useful for the judgment of the improving of the efficiency of the communication channel on the network side as a trigger, and this makes it possible to reduce the burden of processing on the network side.

As described above, according to the second embodiment of the invention, by notifying the information useful for the judgment of the improving of the efficiency of the communication channel, which UE 310 itself can know (e.g. the fact that UE 310 and the correspondent node can be connected to the same management domain, or can be connected to the same access network of the same management domain) to the network side, it is possible to efficiently generate the condition where UE 310 and another UE 310 connected to the same management domain and performing communication with each other are connected to the same access network (i.e. the network under the control of a common routing entity). As a result, it is possible to accomplish the improving of the efficiency of the communication channel for the communication carried out between UE 310 and another UE 310.

### <The third embodiment>

Next, description will be given below on the third embodiment of the invention. In the first embodiment and the second embodiment of the invention as given above, description has been given on an example of a condition where 3G network is operated by a single operation as an example of the same domain (i.e. a condition where management is made by the same manager). As described above, the same domain means the networks under the same management. For instance, this includes the networks under the same management - not only a group of networks, which are managed by the same manager, but also a group of networks, where the managers are different but a relation of reliability exists between the networks, is included in the network under the same management. In the third embodiment of the invention, description will be given on a case where the present invention is applied to the same domain, which consists of the network groups where the managers are different but a relation of reliability exists between them. A network (or a group of networks) managed by a single manager (operator) is referred as "operator network".

For instance, when two UE's are going to start communication, each of these UE's may be called as an operator network with different operators (e.g. PLMN (Public Land Mobile Network) in 3GPP). To clearly discriminate this from the access network, this operator network is referred as PLMN hereinafter. By shifting the operator network with different operators from the condition where it is connected to the network access network to the access network where the operator is the same (by the roaming based on the relation of reliability), it is possible to establish communication channel at least one of PDNGW's is not relayed (e.g. PDNGW's managed by the operator of each of the PLMN operators). Further, in case UE relays PLMN, which is already in roaming relation, it is possible to improve the efficiency of the communication channel by reducing the management devices to pass through from the condition where the management devices of PLMN are passed through.

In the same domain, consisting of groups of networks, which have different operators but are connected with each other in the relation of reliability, there are a wide variety of cases where the efficiency of the communication channels between UE's can be improved according to the present invention. For instance, the improving of the efficiency of the communication channel by the present invention can be applied to the cases of communication modes between UE's as given below.

For example, in the case where PLMN (HPLMN; Home PLMN), to which the UE's performing communication with each other belong:
- Under the condition where each of the UE's is connected to PLMN in different roaming relations (VPLMN: Visiting PLMN);
- Under the condition where one UE is connected to VPLMN and the other UE is connected to HPLMN;
   and, in case where HPLMN's, to which each of the UE's is performing communication with each other, are different from each other;
   the improving of the efficiency of the communication channel by the present invention can be applied in the following cases:
- a case where each of UE's is connected to each of HPLMN's respectively;
- in case one UE is connected to VPLMN, which is different from that of the other UE;
- Both of UE's are connected to different VPLMN's respectively.

Here, if it is supposed that, in the initial operation, UE is connected to HPLMN by selecting it with priority, it is possible to improve the efficiency of the communication channel through communication by connecting to a common PLMN (either one of the PLMN's, to which some of the UE's already belong or another PLMN different from these PLMN's) under any of the conditions as described above.

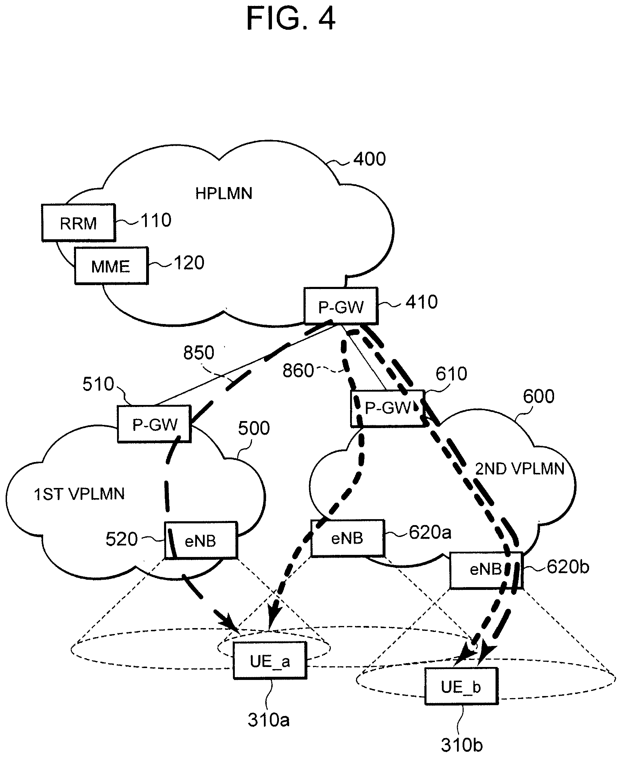

Now, referring to the drawings, description will be given on the third embodiment of the invention. Fig. 4 is a schematical drawing to show a first example of a communication system in the third embodiment of the invention. In the example shown in Fig. 4, it is assumed that each of the UE's 310 (UE_a310a and UE_b310b) performing communication with each other is connected to the same HPLMN and UE_a310a and UE_b310b are connected to different VPLMN's (a first VPLMN 500 and a second VPLMN 600) respectively.

In Fig. 4, there is roaming relation between HPLMN 400, to which UE_a310a and UE_b310b belong, and the other PLMN's (the first VPLMN 500 and the second VPLMN 600). On each of PLMN's (i.e. HPLMN 400, the first VPLMN 500, and the second VPLMN 600), P-GW (Packet Gateway) 410, P-GW 510 and P-GW 610 are installed. Although it is not shown in the first VPLMN 500 and the second VPLMN 600, RRM 110 and MME 120 are present on each PLMN (i.e. HPLMN 400, the first VPLMN 500 and the second VPLMN 600).

Also, the first VPLMN 500 has eNB 520, which will be a connection point to UE 310 (In Fig. 4, two of them, i.e. UE_a310a and UE_b310b are shown.) (In Fig. 4, only a case is shown where the first VPLMN 500 has only one eNB.) Also, the second VPLMN 600 has eNB 620a and eNB 620b, each of which will be a connection point to UE 310. Further, UE 310 has 3G network interface, which can be connected to eNB 520 of the first VPLMN 500 and to eNB 620a and eNB 620b of the second VPLMN 600. Therefore, the communication channel between UE_a301a and UE_b310b is formed as a channel 850 (eNB 520, P-GW 510, P-GW 410, P-GW 610 and eNB 620b).

In the third embodiment of the invention, basically the same procedures as those of the first embodiment or the second embodiment of the invention are carried out. Therefore, although it is not shown in Fig. 4, the communication channel efficiency improving device 500 is installed at an arbitrary point in the network (e.g. in HPLMN 500), or either one or both of UE's 310 performing communication with each other has the same configuration as shown in Fig. 2. For instance, the communication channel efficiency improving device 500 may be installed in HPLMN 500, and either one or both of UE's 310 performing communication with each other may have the same configuration as that of UE 310 shown in Fig. 2.

Next, description will be given on an example of operation in the third embodiment of the invention (operation based on the configuration shown in Fig. 4). In the first embodiment and the second embodiment of the invention as described above, UE's 310 performing communication with each other are connected to the same domain, and the procedure is carried out to judge whether these can be connected to the same access network or not. To cope with this procedure, in the third embodiment of the invention, it is identified whether it is possible or not to judge that UE'310 performing communication with each other can be connected to the same PLMN (VPLMN) (i.e. to judge whether the efficiency of the communication channel can be improved or not). In case the improvement of the efficiency of the communication channel is accomplished, a method to re-configure the communication channel with the improved efficiency is decided, and an instruction necessary for accomplishing the communication channel with the improved efficiency is notified to an adequate entity in the network (i.e. a routing entity or a connection management entity), and an instruction is given to UE 310 to change the connection of PLMN.

As a result, if connection of UE_a310a is changed to the connection to eNB 620a, the communication channel between UE_a310a and UE_b310b is changed as shown by a channel 860. Further, by arranging that the packet is not transferred to P-GW 410, the packet is turned back at P-GW 610 or the like so that the communication channel with the improved efficiency can be accomplished.

As it is evident when the configurations shown in Fig. 1 and Fig. 2 are compared with the configuration shown in Fig. 4, the roaming relation of PLMN is similar to the relation of different access networks in the network group (single PLMN) managed by the same operator. Accordingly, it is possible to sequentially carry out the procedures to judge whether it can be connected to the same access network or not (or to carry out in parallel). As to be described later, in case the judgment on the access network and the judgment on PLMN are carried out sequentially or in parallel, it is desirable that the judgment on PLMN is made with priority.

As the method to judge PLMN, UE_a310a may include information of PLMN currently connected (in Fig. 4, the first VPLMN 500) in (e.g. SIP) such as call setting to the correspondent node UE_b310b. Further, if there is another PLMN (the second VPLMN 600) as seen from itself (i.e. connectable), information on it may be included. In this case, it is desirable that PLMN, which can roam, is selected in advance, and also, it is desirable that the priority of selection and selection standards are included. At the moment when the receiving side UE_b310b receives this information or when the receiving side UE_b310b replies to the transmitting side UE_a310a, it is possible to judge whether there is a connectable and common PLMN or not even when these are connected to different PLMN's at the current moment. When the common PLMN (the second VPLMN 600 in this case) is found, at least one of UE_a310a or UE_b310b notifies this fact to HPLMN. The object of this notification is the communication channel efficiency improving device 500 (not shown in Fig. 4) or the entity on the other network, similarly to the cases of the first and the second embodiments as described above.

Then, UE_a310a, in which it is decided to change PLMN (or UE_b310b or both of UE's 310, depending on the circumstances), receives signaling from the network side that it is necessary to change PLMN. After performing the setting of PLMN selection such as the setting of PLMN, which will be the new connection destination (here, the second VPLMN 600) to higher priority, it is cut off from the first VPLMN 500 currently connected (or cutting procedure is carried out according to the instruction to change PLMN). UE_a310a newly rises up at the second VPLMN 600 and carries out call setting with UE_b310b of the correspondent node at the same time. With regard to the call setting, it is evident that UE's 310 want to perform communication with each other in the initial procedure. Then, necessary procedure may be carried out on the network side or call setting may be quickly carried out at the moment when UE_a310a finishes connection at the second VPLMN 600. In case HPLMN of UE_a310a is different from that of UE_b310b (i.e. in case there are HPLMN_a, to which UE_a310a belongs, and HPLMN_b, to which UE_b310b belongs, and these are managed by different operators), the same procedure can be carried out except that information is transmitted between HPLMN's of each of UE's 310.

As another method to instruct the connection change of PLMN, the change of PLMN from HPLMN may be notified by direct notification (such as voice message, test message, etc.) to the user of UE 310. Also, it is desirable that identification information of PLMN to be selected or a short-cut to manual selecting function of PLMN may be presented in association with this message. The method to directly notify the connection change of PLMN to the user of UE 310 is effective in case UE 310 cannot be directly controlled because of the processing of the change of PLMN from HPLMN 500. In particular, by arranging that manual PLMN selection can be made during the time when UE 310 is in communication, the present invention can be applied to various situations.

Further, it may be so arranged that, when a common PLMN (e.g. the second VPLMN 600 in Fig. 4), which can be connected by both of UE_a310a and UE_b310b performing communication with each other, is found, UE 310 to perform the connection change of PLMN (e.g. UE_a310a) may notify this fact to PLMN (e.g. to the first VPLMN 500). In so doing, the first VPLMN 500 can perform processing relating to the change of PLMN. To carry out this method, it may be necessary to reduce the restriction of control of PLMN change. In this case, depending on the roaming relation, it may be necessary to have agreement on the permission of such operation (i.e. operation to allow VPLMN to change the connection to the other PLMN).

Further, when UE 310 and another UE 310 perform the procedure to judge whether they can be connected to the same PLMN, the connection to the same access network may be judged in parallel by these UE's 310. For instance, the communication channel efficiency improving device 500 may make judgment on PLMN and the judgment on the access network at the same time, (the procedure in the first embodiment of the invention is applied), or UE 310 may notify the information useful for the judgment on PLMN and the information useful for the judgment on the access network at the same time as the information useful for the judgment of the improving of the efficiency of the communication channel (the procedure of the second embodiment of the invention is applied). As a result, UE'310 can make judgment in parallel on the access network and on PLMN in common, which can be connected to each of the UE's 310. In this case, as the operation of connection change of UE 310, the improving of the efficiency of the communication channel can be accomplished by changing only the access network, or by changing only PLMN, or by changing both of the access network and PLMN.

In the above, description has been given on the assumption that the improving of the efficiency of the communication channel can be accomplished when each of UE's 310 selects PLMN, which is common to both. Depending on the roaming relation between PLMN's, the efficiency of the communication channel can be improved by minimizing PLMN change or access network change. In such case, judgment result may be induced, in which it is desirable that UE 310 does not change the connection. Specifically, by notifying the information of the access network or PLMN, which can be detected (and connected by each of UE's 310 (regardless whether it is HPLMN or VPLMN), the entities on the network side can confirm the roaming relation between PLMN's, and, if possible, by adequately re-connecting the routing entity in the network without changing the access network and/or PLMN, to which UE 310 is currently connected, the efficiency of the communication channel between UE's 310 can be improved. In this case, also, the method according to the present invention can be effectively utilized (i.e. the method to judge the communication channel with the improved efficiency at the communication channel efficiency improving device 500, or a method to judge whether UE 310 can be connected to a common access network and/or PLMN or not and to notify this to the entity on the network side.

Even in case the same types of access networks are present, to which UE 310 can be connected, if the PLMN to manage the access network is different, there may the cases where the efficiency of the communication cannot be improved even when connection is changed so that UE 310 can be connected to the same type of access network. Therefore, priority should be given on the common use of PLMN rather than the common use of the access network. By giving consideration on this point, it is desirable to realize common use of the access network after attaining the common use of PLMN, or higher priority is given to the result of judgment of PLMN rather than the result of judgment of the access network when the judgment of the access network and the judgment of PLMN are carried out in parallel.

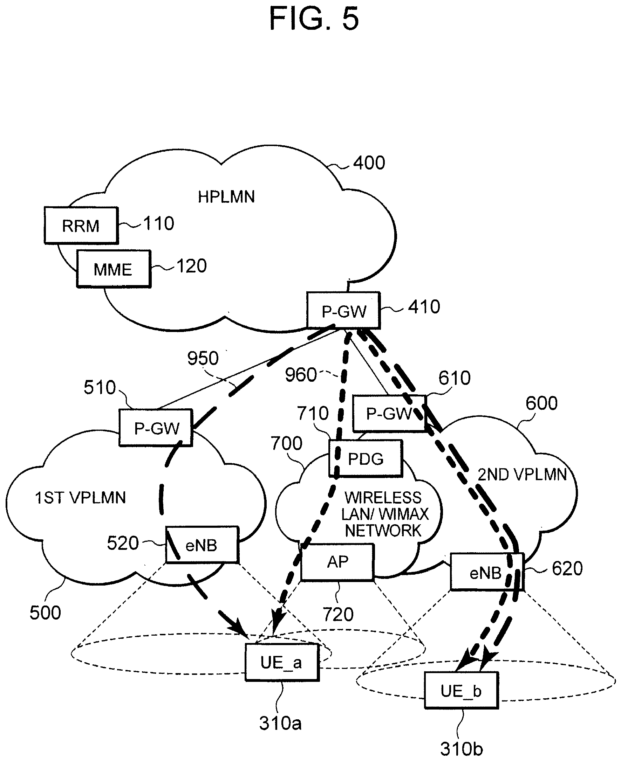

By referring to a first example of the communication system in the third embodiment of the invention as shown in Fig. 5, description will be given below on the priority of common use of the access network and the common use of PLMN. In the configuration shown in Fig. 5, in addition to the configuration shown in Fig. 4, a wireless LAN/WiMAX network 700 including PDG 710 and AP 720 is present as the access network managed by the second VPLMN 600. Also, it is supposed here that UE_a310a has both of 3G network interface connectable to eNB of 3G network and also a wireless LAN interface connectable to AP of the wireless LAN/WiMAX network.

It is supposed here, for instance, that UE_a310a is connected to 3G access of the first VPLMN 500 (via eNB 520), and that WiMAX (non-3G)) access (via AP 720) of the second VPLMN 600 can be seen under this condition. Also, it is assumed that UE_b310b is connected to 3G access of the second VPLMN (via eNB 620). Therefore, the communication channel between UE_a310a and UE_b310b is formed as a channel 950 (via eNB 520, P-GW 510, P-GW 410, P-GW 610 and eNB 620).

In this case, both UE_a310a and UE_b310b are connected to 3G network. If priority is given on the common use of PLMN, it is desirable that UE_a310a selects WiMAX (non-3G) access of the second VPLMN 600 instead of 3G access of the first VPLMN 500 as the connection to use for the communication with UE_b310b. In this connection, from the viewpoint of the improving of the efficiency of the communication channel, the entity on the network side gives instruction to change PLMN and to change the type of access network after giving instruction to UE_a310a to search WiMAX (non-3G) access in case UE_a310a does not yet the presence of WiMAX (non-3G) access.

This result approximately coincides with the result of the case where the procedures to judge whether connection can be made or not to the same type of access network after the judgment to select the common PLMN. For the purpose of clearly indicate that different access to different PLMN is not selected at the time of selecting the same type of access network, it is effective to give priority on the common use of PLMN or common use of access network (i.e. to notify UE 310).

In case UE_a310a changes the connection to AP 720, the communication channel between UE_a310a and UE_b310b is changed as shown in the channel 960. Further, by arranging that the packet is not transferred to P-GW 410, the packet is turned back at P-GW 610 or PDG 710, and the communication channel with higher efficiency can be accomplished.

There are access networks offered in narrower scope such as picocell, femtocell, etc. In these types of small scale cells, there are many cases where the following types of information can be detected together with identification information of the small scale cell: information to indicate that it is associated with a wide area cell in supplementary relation (e.g. macrocell constituted by eNB), information relating to the operator in operation, or information such as geographical information. Small scale cells are included in the access network detectable by UE 310 itself (even when in case connection cannot be made to the access network). When identification information of the small scale cells or other types of information can be detected, the following types of information can be referred either directly or indirectly: Who is the operator of PLMN (service operator in many cases) operating in the vicinity? Where is UE 310 itself present? What is the wide area cell in complementary relation? Based on these types of information, it is possible to identify the access network or PLMN, which can improve the efficiency of the communication channel between UE's 310 themselves (i.e. common access network or common PLMN).

For instance, in case each of UE's 310 detects the small scale cells under management by the same PLMN, even when these are the same small scale cells, it is possible to estimate that the wide area cells in complementary relation are the same PLMN without confirming PLMN of the wide area cells. As a result, each of the these UE's 310 can notify to the entity on the network side that 3G wide area cells of PLMN for managing small scale cells are used in common, or can notify to change 3G wide area cells of PLMN, which manages the small scale cells in earlier stage.

In the present specification, description is given on identification of the moment when UE 310 starts communication or connection change. Even when the conditions of the access network or PLMN to be detected during communication (in particular, during movement while in communication), it is evident that the efficiency of the communication channel can be improved each time by the method to select the access network and/or PLMN of the present invention. Also, for the signaling in this case, any arbitrary signaling method may be used because UE 310 is already in communication.

In the present specification, it is so arranged that UE 310 can be connected to 3G network 100 and wireless LAN/WiMAX network 200, while it is also possible to apply the present invention to UE 310, which performs communication by using WiFi (IEEE 802.11), or the next generation communication technique (4G) or other radio communication technique. The present invention can also be applied to the network conditions where different types of access networks with communicable range overlapped on each other (or the access network with different routing entities) are present.

In the present specification, description is given and drawings are shown by giving consideration on the most practical and the most preferred embodiments while it would be obvious to those skilled in the art that various changes and modifications may be made on the detailed design and the parameters relating to component elements without departing from the scope of the invention. For instance, in the present invention, UE 310 may be a mobile host to operate mobile IP, or a mobile router to operate network mobility support.

In the description of the present invention, simple arrangement as shown in Fig. 3 is given as network arrangement, while the arrangement of local network domain may be more diversified including the roaming relation between a plurality of operators. For instance, the arrangement from PDG 120 to AP 230 is not given (PDG 210 is described as an arrangement as if it is an access router of UE 310), while there may be arrangements, i.e. PDG 210 is a boundary router with the different access networks (including roaming), and UE 310 is connected to PDG 210, which is a boundary router, via the access network after being connected to different access network. In such case, design details such as the procedure to reach various parameters and PDG 210 and communication procedure may be different, but it is evident that the invention can be applied in similar manner for the solution of the problems, which is the object of the invention.

Each functional block used in the description of the embodiments of the present invention as given above can be realized as LSI (Large Scale Integration), typically represented by the integrated circuit. These may be produced as one chip individually or may be designed as one chip to include a part or all. Here, it is referred as LSI, while it may be called IC, system LSI, super LSI, or ultra LSI, depending on the degree of integration.

Also, the technique of integrated circuit is not limited only to LSI and it may be realize Programmable Gate Array), which can be programmed after the Programmable Gate Array), which can be programmed after the manufacture of LSI, or a reconfigurable processor, in which connection or setting of circuit cell inside LSI can be reconfigured, may be used.

Further, with the progress of semiconductor technique or other techniques derived from it, when the technique of circuit integration to replace LSI may emerge, the functional blocks may be integrated by using such technique. For example, the adaptation of biotechnology is one of such possibilities.

### INDUSTRIAL APPLICABILITY

The present invention has such effects that the efficiency of the communication channel in the communication performed between radio communication terminals is improved, and the invention can be applied to the technique to improve the efficiency of the communication channel.

## Claims

1. A radio communication terminal (310b) in a communication system with a plurality of different access networks, said radio communication terminal comprising means (320, 330) adapted for:
determining whether said radio communication terminal (310b) and a correspondent user equipment (310a) of said radio communication terminal (310b) are connected to networks under a common management;
transmitting, to said correspondent user equipment (310a), first identification information indicating the access network (200) to which said radio communication terminal (310b) is currently connected and access networks (100) to which said radio communication terminal (310b) can be connected;
receiving, from said correspondent user equipment (310a), second identification information indicating an access network (100) to which said correspondent user equipment (310a) is currently connected and access networks (200) to which said correspondent node (310a) can be connected;
comparing the first identification information with the second identification information indicating the access network (200) to determine whether said radio communication terminal (310b) and said correspondent user equipment (310a) can be connected to a common access network (200);
if it is determined that said radio communication terminal (310b) and said correspondent user equipment (310a) can be connected to a common access network (200), transmitting identification information indicating the common access network (200) to the correspondent user equipment (310a); and
notifying said network about the common access network (200) if the correspondent user equipment (310a) and said radio communication terminal (310b) are connected to networks under common management.

2. The radio communication terminal according to claim 1, further comprising means for notifying a priority to use said first identification information to said correspondent user equipment.

3. The radio communication terminal according to claim 1, wherein said means is so arranged that said first identification information is notified when connection with said correspondent user equipment (310a) is started.

4. The radio communication terminal according to claim 1, further comprising a priority receiving means for receiving a priority to the use of said second identification information from said correspondent user equipment (310a).

## Patentansprüche

1. Funkkommunikationsendgerät (310b) in einem Kommunikationssystem mit zahlreichen verschiedenen Zugangsnetzen, wobei das Funkkommunikationsendgerät Einrichtungen (320, 330) umfasst, die eingerichtet sind für das:
Bestimmen, ob das Funkkommunikationsendgerät (310b) und ein entsprechendes Benutzergerät (310a) des Funkkommunikationsendgeräts (310b) unter einer gemeinsamen Verwaltung mit Netzen verbunden sind;
Senden von ersten Identifikationsinformationen, die das Zugangsnetz (200), mit dem das Funkkommunikationsendgerät (310b) gegenwärtig verbunden ist, und Zugangsnetze (100) angeben, mit denen das Funkkommunikationsendgerät (310b) verbunden werden kann, an das entsprechende Benutzergerät (310a);
Empfangen von zweiten Identifikationsinformationen, die ein Zugangsnetz (100) angeben, mit dem das entsprechende Benutzergerät (310a) gegenwärtig verbunden ist, und Zugangsnetze (200) angeben, mit denen der entsprechende Knoten (310a) verbunden werden kann, von dem entsprechenden Benutzergerät (310a);
Vergleichen der ersten Identifikationsinformationen mit den zweiten Identifikationsinformationen, die das Zugangsnetz (200) anzeigen, um zu bestimmen, ob das Funkkommunikationsendgerät (310b) und das entsprechende Benutzergerät (310a) mit einem gemeinsamen Zugangsnetz (200) verbunden werden können;
wenn bestimmt wird, dass das Funkkommunikationsendgerät (310b) und das entsprechende Benutzergerät (310a) mit einem gemeinsamen Zugangsnetz (200) verbunden werden können, Senden von Identifikationsinformationen, die das gemeinsame Zugangsnetz (200) anzeigen, an das entsprechende Benutzergerät (310a); und
Benachrichtigen des Netzes über das gemeinsame Zugangsnetz (200), wenn das entsprechende Benutzergerät (310a) und das Funkkommunikationsendgerät (310b) mit Netzen unter gemeinsamer Verwaltung verbunden sind.

2. Funkkommunikationsendgerät nach Anspruch 1, weiterhin umfassend Einrichtungen zum Benachrichtigen einer Priorität zur Verwendung der ersten Identifikationsinformationen an das entsprechende Benutzergerät.

3. Funkkommunikationsendgerät nach Anspruch 1, bei dem die Einrichtung derart eingerichtet ist, dass die ersten Identifikationsinformationen mitgeteilt werden, wenn die Verbindung mit dem entsprechenden Benutzergerät (310a) begonnen wird.

4. Funkkommunikationsendgerät nach Anspruch 1, weiterhin umfassend eine Prioritätsempfangseinrichtung zum Empfangen einer Priorität für die Verwendung der zweiten Identifikationsinformationen von dem entsprechenden Benutzergerät (310a).

## Revendications

1. Terminal de radiocommunication (310b) dans un système de communication avec une pluralité de réseaux d'accès différents, ledit terminal de radiocommunication comprenant des moyens (320, 330) adaptés pour :
déterminer si ledit terminal de radiocommunication (310b) et un équipement utilisateur correspondant (310a) dudit terminal de radiocommunication (310b) sont connectés à des réseaux selon une gestion commune ;
transmettre, audit équipement utilisateur correspondant (310a), des premières informations d'identification indiquant le réseau d'accès (200) auquel ledit terminal de radiocommunication (310b) est actuellement connecté et des réseaux d'accès (100) auxquels ledit terminal de radiocommunication (310b) peut être connecté ;
recevoir, dudit équipement utilisateur correspondant (310a), des secondes informations d'identification indiquant un réseau d'accès (100) auquel ledit équipement utilisateur correspondant (310a) est actuellement connecté et des réseaux d'accès (200) auxquels ledit nœud correspondant (310a) peut être connecté ;
comparer les premières informations d'identification avec les secondes informations d'identification indiquant le réseau d'accès (200) pour déterminer si ledit terminal de radiocommunication (310b) et ledit équipement utilisateur correspondant (310a) peuvent être connectés à un réseau d'accès commun (200) ;
s'il est déterminé que ledit terminal de radiocommunication (310b) et ledit équipement utilisateur correspondant (310a) peuvent être connectés à un réseau d'accès commun (200), transmettre des informations d'identification indiquant le réseau d'accès commun (200) à l'équipement utilisateur correspondant (310a) ; et
notifier audit réseau le réseau d'accès commun (200) si l'équipement utilisateur correspondant (310a) et ledit terminal de radiocommunication (310b) sont connectés à des réseaux selon une gestion commune.

2. Terminal de radiocommunication selon la revendication 1, comprenant en outre des moyens pour notifier une priorité d'utilisation desdites premières informations d'identification audit équipement utilisateur correspondant.

3. Terminal de radiocommunication selon la revendication 1, dans lequel lesdits moyens sont disposés de telle sorte que lesdites premières informations d'identification sont notifiées lorsqu'une connexion avec ledit équipement utilisateur correspondant (310a) est commencée.

4. Terminal de radiocommunication selon la revendication 1, comprenant en outre des moyens de réception de priorité pour recevoir une priorité d'utilisation desdites secondes informations d'identification en provenance dudit équipement utilisateur correspondant (310a).
